# EUROPEAN PATENT APPLICATION

(11) **EP 3 878 605 A1**
(43) Date of publication of application: **15.09.2021**
(21) Application number: 19883050.7
(22) Date of filing: 31.10.2019
(51) Int. Cl.: B25J 13/08

(54) **ROBOT CONTROL DEVICE, ROBOT CONTROL METHOD, AND ROBOT CONTROL PROGRAM**

(30) Priority: 09.11.2018 JP 2018211422
(71) Applicant: OMRON Corporation, Shiokoji-dori, Shimogyo-ku, Kyoto-shi Kyoto 600-8530 (JP)
(72) Inventor: HAYASHI, Kennosuke, Kyoto 619-0283 (JP); OKAWA, Yohei, Kyoto 619-0283 (JP); YAMAGUCHI, Yuki, Kyoto 619-0283 (JP); SHIBATA, Yoshiya, Kyoto 619-0283 (JP)
(74) Representative: Becker, Eberhard
(86) International application number: PCT/JP2019/042709
(87) International publication number: WO 2020/095805

(57) **Abstract**

A robot control device according to the present invention accepts an input of information 201 specifying an object 70 of a specific kind, which is to be manipulated by a robot 20, from among objects of a plurality of kinds, and an input of information 202 specifying a target relative positional relationship between the specified object 70 of the specific kind and the distal end of a hand of the robot 20. The robot control device extracts the object 70 of the specific kind from image information 501 obtained by photographing the objects of the plurality of kinds and the surrounding environment thereof, and generates information 301 indicating the position and orientation of the object 70. The robot control device generates an action instruction 401 from the result of learning by a learning module 103, the action instruction 401 serving to match the relative positional relationship between the object 70 and the distal end of the hand of the robot 20 with the target relative positional relationship, and outputs the action instruction 401 to the robot 20.

## Description

### BACKGROUND

### [Technical Field]

The present invention relates to a robot control device, a robot control method, and a robot control program.

### [Background Art]

In recent years, a wide range of research on machine learning has been conducted. In particular, with the development of a technique called deep learning using a neural network, learning modules that exhibit a performance equal to or higher than that of human cognitive ability can be used. Under this background, research is being conducted to apply a machine learning algorithm to generation of robot action instructions. For example, Non-Patent Literature 1 proposes machine learning for a robot to grip an object. In this machine learning, learning is performed such that, using image data acquired from a camera that images an object to be gripped and candidate data for instruction values of a motor that drives a robot as information input to a learning module, an instruction value to the motor that has the highest gripping probability with respect to the object to be gripped is output. In this manner, in the conventional machine learning, for example, learning is performed using a plurality of image data items that are intended so that a robot grips an object to be gripped as expected by an operator.

### [Citation List]

### [Non-Patent Literature]

[Non-Patent Literature 1]
Sergey Levine et al., "Learning Hand-Eye Coordination for Robotic Grasping with Deep Learning and Large-Scale Data Collection," ISER 2016.

### SUMMARY

### [Technical Problem]

In such conventional machine learning, after learning is completed once, in order to finely adjust an action of a robot, it is necessary to perform relearning using a plurality of image data items that are intended so that the robot performs a finely-adjusted action as expected by an operator. Such fine adjustment is necessary, for example, when it is desired by the operator to reduce the number of unintended robot malfunctions or when it is desired to change the action of the robot (for example, when it is desired to change the position where the robot grips an object) according to the ex-post convenience of the operator. Therefore, it is difficult to artificially perform adjustment such that the robot operates as expected by the operator without relearning after learning is completed once.

Here, the present invention has been made in order to address such problems and an objective of the present invention is to propose a robot control device, a robot control method, and a robot control program that can adjust a robot so that it operates as expected by an operator.

### [Solution to Problem]

In order to address the above problems, a robot control device according to the present invention includes an input unit configured to receive an input of information that specifies a specific kind of object to be manipulated by a robot among a plurality of kinds of objects and an input of information that specifies a target relative positional relationship between the specific kind of object specified and a distal end of a hand of the robot; an imaging device configured to image the plurality of kinds of objects and the surrounding environment; an extraction unit configured to extract the specific kind of object specified from image information obtained by imaging by the imaging device and generate information indicating the position and orientation of the specific kind of object; a detection device configured to detect the position and orientation of the robot; a learning module including a trained model in which the action of the robot has undergone machine learning so that the relative positional relationship between the specific kind of object specified and the distal end of the hand matches the target relative positional relationship or a model having the same input and output relationship as the trained model; and an output unit configured to generate an action instruction that instructs the robot to perform an action so that the relative positional relationship between the object and the distal end of the hand determined based on the information indicating the position and orientation of the specific kind of object generated by the extraction unit and information indicating the position and orientation of the robot detected by the detection device matches the target relative positional relationship from the learning result of the learning module and output the instruction to the robot.

In this manner, when a learning module in which the action of the robot has undergone machine learning so that the relative positional relationship between the two matches the target relative positional relationship using the information that specifies the target relative positional relationship between the object to be manipulated by the robot and the distal end of the hand of the robot as an input is used, it is possible to adjust the robot so that it operates as expected by the operator without relearning the learning module.

The target relative positional relationship between the object and the distal end of the hand may be constant regardless of the positions and orientations of the robot and the object. Thereby, the robot can be caused to perform an action of performing manipulation regarding a certain physical quantity.

The target relative positional relationship between the object and the distal end of the hand can be changed by specification of the operator. Thereby, it is possible to adjust the robot so that it operates as expected by the operator without relearning the learning module.

The input unit may include a graphical user interface for specifying the target relative positional relationship between the object and the distal end of the hand. The operator can intuitively specify the target relative positional relationship between the object and the distal end of the hand via the graphical user interface.

The information that specifies the specific kind of object may be input to the extraction unit. Thereby, the extraction unit can extract the specific kind of object specified to be manipulated by the robot among the plurality of kinds of objects from image information obtained by imaging by the imaging device.

A robot control method according to the present invention, causes a computer system to execute: a step of receiving an input of information that specifies a specific kind of object to be manipulated by a robot among a plurality of kinds of objects; a step of receiving an input of information that specifies a target relative positional relationship between the specific kind of object specified and a distal end of a hand of the robot; a step of imaging the plurality of kinds of objects and the surrounding environment; a step of extracting the specific kind of object specified from image information obtained by the imaging and generating information indicating the position and orientation of the specific kind of object; a step of detecting the position and orientation of the robot; a step of preparing a learning module including a trained model in which the action of the robot has undergone machine learning so that the relative positional relationship between the specific kind of object specified and the distal end of the hand matches the target relative positional relationship or a model having the same input and output relationship as the trained model; and a step of generating an action instruction that instructs the robot to perform an action so that the relative positional relationship between the object and the distal end of the hand determined based on the information indicating the position and orientation of the specific kind of object and information indicating the position and orientation of the robot matches the target relative positional relationship from the learning result of the learning module and outputting the instruction to the robot.

In this manner, when a learning module in which the action of the robot has undergone machine learning so that the relative positional relationship between the two matches the target relative positional relationship using the information that specifies the target relative positional relationship between the object to be manipulated by the robot and the distal end of the hand of the robot as an input is used, it is possible to adjust the robot so that it operates as expected by the operator without relearning the learning module.

A robot control program according to the present invention causes a computer system to execute: a step of receiving an input of information that specifies a specific kind of object to be manipulated by a robot among a plurality of kinds of objects; a step of receiving an input of information that specifies a target relative positional relationship between the specific kind of object specified and a distal end of a hand of the robot; a step of imaging the plurality of kinds of objects and the surrounding environment; a step of extracting the specific kind of object specified from image information obtained by the imaging and generating information indicating the position and orientation of the specific kind of object; a step of detecting the position and orientation of the robot; a step of preparing a learning module including a trained model in which the action of the robot has undergone machine learning so that the relative positional relationship between the specific kind of object specified and the distal end of the hand matches the target relative positional relationship or a model having the same input and output relationship as the trained model; and a step of generating an action instruction that instructs the robot to perform an action so that the relative positional relationship between the object and the distal end of the hand determined based on the information indicating the position and orientation of the specific kind of object and information indicating the position and orientation of the robot matches the target relative positional relationship from the learning result of the learning module and outputting the instruction to the robot.

In this manner, when a learning module in which the action of the robot has undergone machine learning so that the relative positional relationship between the two matches the target relative positional relationship using the information that specifies the target relative positional relationship between the object to be manipulated by the robot and the distal end of the hand of the robot as an input is used, it is possible to adjust the robot so that it operates as expected by the operator without relearning the learning module.

### [Advantageous Effects of Invention]

According to the present invention, it is possible to adjust the robot so that it operates as expected by the operator.

### BRIEF DESCRIPTION OF THE DRAWINGS

Fig. 1 is an explanatory diagram of robot action control using a learning module according to the present embodiment.
Fig. 2 is an explanatory diagram showing a configuration of a robot control device and a robot according to the present embodiment.
Fig. 3 is an explanatory diagram showing an example of a hardware configuration of the robot control device according to the present embodiment.
Fig. 4 is a block diagram showing an example of functions of the robot control device according to the present embodiment.
Fig. 5 is an explanatory diagram showing an example of a graphical user interface according to the present embodiment.
Fig. 6 is a flowchart showing an example of a flow of a process of a robot control method according to the present embodiment.

### DESCRIPTION OF EMBODIMENTS

Hereinafter, embodiments according to one aspect of the present invention will be described with reference to the drawings. The embodiments of the present invention are provided to facilitate understanding of the present invention and are not intended to limit the interpretation of the present invention. The present invention can be modified or improved without departing from the spirit thereof and the present invention includes equivalents thereof. Here, the same reference numerals indicate the same components, and redundant descriptions will be omitted.

### [Application example]

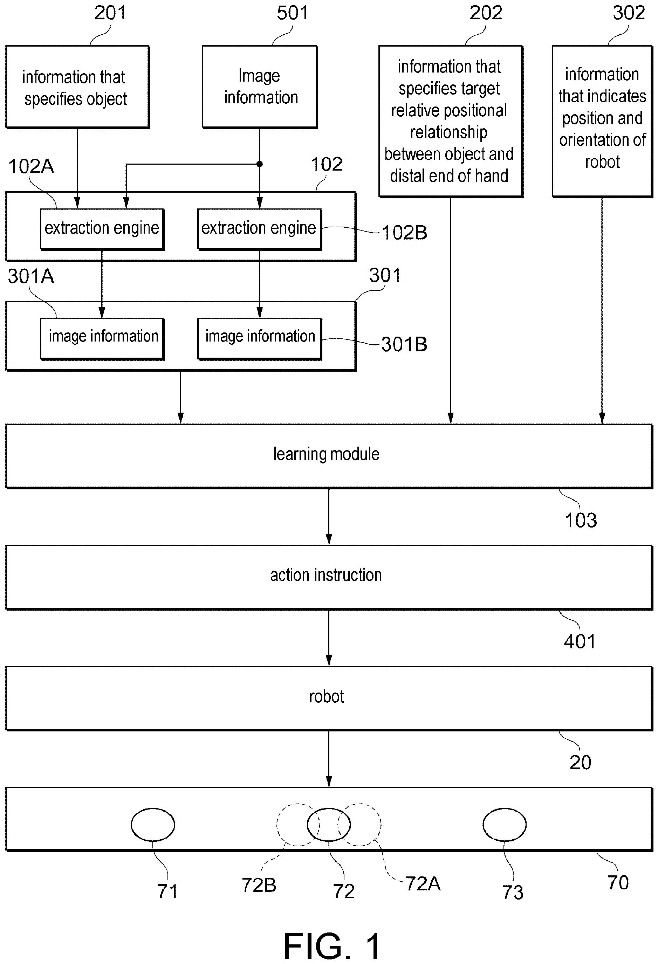

First, an application example of the present invention will be described with reference to Fig. 1.

In the present embodiment, an action of a robot 20 is controlled using a learning module 103. Specific examples of the robot 20 include a vertical articulated robot, a horizontal articulated robot, an orthogonal robot, and a parallel link robot. The robot 20 operates as a manipulator that operates autonomously, and can be used for any purpose, for example, assembling, transporting, painting, inspecting, polishing, or cleaning parts. Examples of actions of the robot 20 include actions for the robot 20 to manipulate (for example, grip, attach, move, or perform orientation control for) an object 70. Examples of the object 70 to be manipulated by the robot 20 include workpieces such as products or parts. In addition, as an example of the action of the robot 20, a gripping action for picking a specific kind of object among a plurality of kinds of objects stacked in bulk can be exemplified.

First, an overview of a learning method performed by the learning module 103 will be described. Here, a machine learning example of a gripping action for picking a specific kind of object 70 among a plurality of kinds of objects having different appearance characteristics (for example, a combination of a shape, a size, and a color) stacked in bulk will be described.

An extraction unit 102 inputs information 201 for specifying a specific kind of object 70 to be manipulated by the robot 20 among a plurality of kinds of objects, inputs image information 501 obtained by imaging a plurality of kinds of objects and the surrounding environment, extracts a specific kind of object 70 that is specified among a plurality of kinds of objects and outputs information 301 indicating the position and orientation of the specific kind of object 70. The extraction unit 102 includes extraction engines 102A and 102B. The extraction engine 102A has a function of identifying appearance characteristics of each kind of object by image recognition, and extracts image information 301A of the specific kind of object 70 from the image information 501 based on the information 201 that specifies the specific kind of object 70. Regarding a function of identifying appearance characteristics of an object, for example, an algorithm called model-based matching can be used. The extraction engine 102B extracts image information 301B of the environment around the specific kind of object 70 from the image information 501. The position and orientation of the specific kind of object 70 can be obtained from the image information 301A and 301B through image analysis. The information 301 including the image information 301A and 301B indicates the position and orientation of the specific kind of object 70. Here, the extraction engines 102A and 102B are, for example, software modules included in a robot control program to be described below.

The information 301 indicating the position and orientation of the object 70 specified by the information 201, information 202 that specifies a target relative positional relationship between the object 70 specified by the information 201 and a distal end of a hand of the robot 20, and information 302 indicating the position and orientation of the robot 20 are input to the learning module 103. The relative positional relationship between the object 70 and the distal end of the hand of the robot 20 can be determined using, for example, relative position coordinate information (for example, the X coordinate, the Y coordinate, and the Z coordinate in the XYZ coordinate system) and orientation information (for example, a roll angle α, a pitch angle β, and a yaw angle γ) of the object 70 when viewed from the distal end of the hand of the robot 20. The information 302 is information output from a detection device (for example, an encoder) that detects an angle of each joint of the robot 20.

When the information 202 that specifies the target relative positional relationship between the object 70 and the distal end of the hand of the robot 20 is input, a candidate for the orientation (joint angle of each joint) of the robot 20 that realizes the target relative positional relationship is determined by inverse kinematics based on current positions and orientations of the robot 20 and the object 70. When there is a plurality of candidates for the orientation of the robot 20 that realizes the target relative positional relationship, one of the candidates may be selected based on the evaluation value of the evaluation function. Regarding such an evaluation function, for example, an evaluation function that outputs an evaluation value that changes according to the length of the movement path of the robot 20 may be used. In this manner, when the orientation of the robot 20 that realizes the target relative positional relationship between the object 70 and the distal end of the hand of the robot 20 is determined, an action instruction 401 for causing the robot 20 to assume the determined orientation is determined. The action instruction 401 is, for example, an instruction signal that is applied to a motor which drives each joint of the robot 20. The learning module 103 performs supervised learning on a combination of the information 201, 202, 301, and 302 and the action instruction 401.

Here, learning of an action of the distal end of the hand of the robot 20 gripping the object 70 is supplemented. Fig. 1 shows an example of learning of an action of the distal end of the hand of the robot 20 gripping three different parts 71, 72, and 73 as parts of the object 70 that the robot grips. For example, in order to perform learning so that the distal end of the hand of the robot 20 performs an action of gripping the part 71 of the object 70, information that specifies a specific kind of object 70 to be manipulated among a plurality of kinds of objects is used as the information 201, and information that specifies the target relative positional relationship between the part 71 of the object 70 and the distal end of the hand of the robot is used as the information 202. Similarly, in order to perform learning so that the distal end of the hand of the robot 20 performs an action of gripping the part 72 of the object 70, information that specifies a specific kind of object 70 to be manipulated among a plurality of kinds of objects is used as the information 201, and information that specifies the target relative positional relationship between the part 72 of the object 70 and the distal end of the hand of the robot 20 is used as the information 202. In addition, similarly, in order to perform learning so that the distal end of the hand of the robot 20 performs an action of gripping the part 73 of the object 70, information that specifies a specific kind of object 70 to be manipulated among a plurality of kinds of objects is used as the information 201, and information that specifies the target relative positional relationship between the part 73 of the object 70 and the distal end of the hand of the robot 20 is used as the information 202. The relative positional relationship between the distal end of the hand of the robot 20 and the object 70 is different for each of the parts 71, 72, and 73. In this manner, for each of the parts 71, 72, and 73, the learning module 103 performs supervised learning on a combination of the information 201, 202, 301, and 302 and the action instruction 401.

For convenience of explanation, in the example shown in Fig. 1, an example of learning an action of gripping three different parts of the object 70 is shown, but an action of gripping each of a plurality of subdivided small parts of the object 70 may be learned. In addition, in the learning stage, while changing parameter values indicating the position and orientation of the robot 20 and parameter values indicating the position and orientation of the object 70 to random values, machine learning of the learning module 103 may be performed on all positions and orientations that the robot 20 and the object 70 can assume. Here, machine learning of the learning module 103 is performed on respective objects other than the object 70 among the plurality of kinds of objects according to the above method.

When machine learning is performed in this manner, the action instruction 401 determined according to a combination of the information 201, 202, 301, and 302 is generated from the learning result of the learning module 103 and outputs to the robot 20. For example, when information that specifies a specific kind of object 70 to be manipulated among a plurality of kinds of objects is used as the information 201, and information that specifies the target relative positional relationship between the part 71 of the object 70 and the distal end of the hand of the robot is used as the information 202, the action instruction 401 for causing the robot to select one object 70 from among the plurality of kinds of objects and grip the part 71 of the selected object 70 is output to the robot. The robot 20 selects one object 70 from among a plurality of kinds of objects, and grips the part 71 of the selected object 70 in response to the action instruction 401.

In such action control of the robot 20, there may be case in which it is desired to change the action of the robot 20 according to the ex-post convenience of the operator. For example, among parts of the object 70, when the part 71 is easily scratched but the part 73 is not easily scratched, information that specifies the target relative positional relationship between the part 73 of the object 70 and the distal end of the hand of the robot 20 is input as the information 202 to the learning module 103, and thus the part of the object 70 that the robot grips can be changed from the part 71 to the part 73.

In addition, although learning is performed so that the robot 20 grips the part 72 of the object 70 by machine learning, when the robot grips a part 72A which is a part slightly deviated from the part 72 due to an influence of an error or the like, information that specifies the target relative positional relationship between a part 72B as an object and the distal end of the hand of the robot determined in consideration of the direction of the error and the degree of the error from the part 72 of the object 70 is input as the information 202 to the learning module 103, and thus the part of the object 70 that the robot 20 grips can be finely adjusted to match the part 72.

In this manner, the target relative positional relationship between the object 70 and the distal end of the hand of the robot 20 can be changed by specification of the operator.

According to the present embodiment, when the learning module 103 in which machine learning of the action of the robot 20 has been performed so that the relative positional relationship between the two matches the target relative positional relationship specified by the information 202 using the information 202 that specifies the target relative positional relationship between the object 70 that the robot 20 manipulates and the distal end of the hand of the robot 20 as an input is used, artificial adjustment can be performed such that the robot 20 operates as expected by the operator without relearning the learning module 103.

Here, since the target relative positional relationship between the object 70 and the distal end of the hand of the robot 20 is constant regardless of the positions and orientations of the robot 20 and the object 70, machine learning of the learning module 103 using the information 202 is not limited to the action of gripping an object. For example, machine learning for causing the robot 20 to perform an action of changing the orientation of an object in which a liquid is stored by a certain angle and causing a certain volume of a liquid to flow from the object, and machine learning for causing the robot 20 to perform an action of performing manipulation regarding a certain physical quantity can be applied.

The learning module 103 includes one unit of dedicated or general-purpose hardware or software having an ability to learn action control of the robot 20 by machine learning or one unit obtained by arbitrarily combining these. The learning module 103 may include software program including a trained model having an ability to learn action control of the robot 20 by machine learning. The learning module 103 may include a storage device in which the software program is stored and a hardware processor that reads the software program from the storage device. The learning module 103 may include a replica or distillate of the trained model. Here, the replica of the trained model includes not only a duplicate of the internal structure of the model but also a trained learning module that has been trained or a replica of the trained learning module that has performed additional learning. The distillate means a trained model obtained by so-called distillation. Distillation includes training of another learning model having a different structure from the trained model so that functions of the trained model are maintained to obtain the other trained model that has been trained. Here, the other trained model (distillate) may have a simpler internal structure than the trained model on which it is based and may be more suitable for deployment. Here, the replica or distillate of the trained model does not necessarily to have a learning ability. The learning module 103 may have a predetermined structure having a function of converting an input (for example, the information 201, 202, 301, and 302) into an output (for example, the action instruction 401) according to parameters. Examples of such a structure may include a neural network.

### [Hardware configuration]

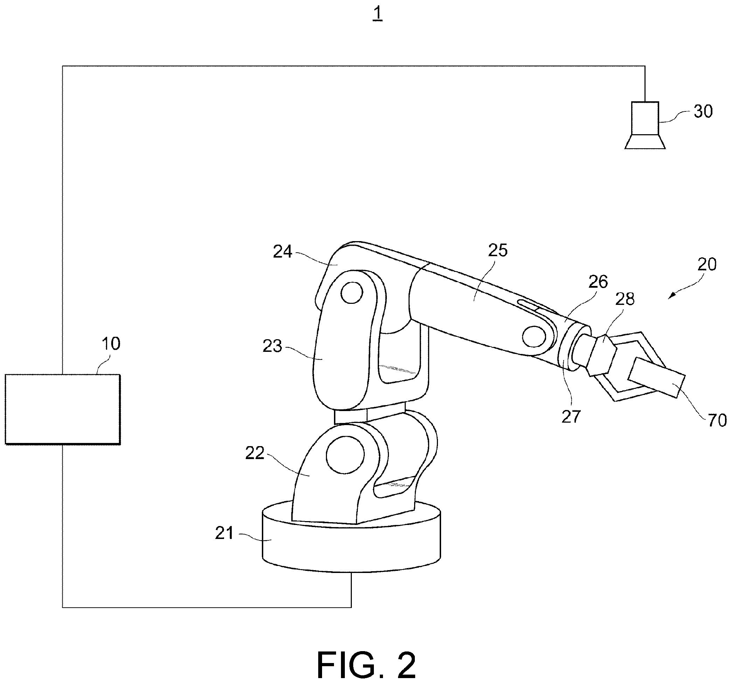

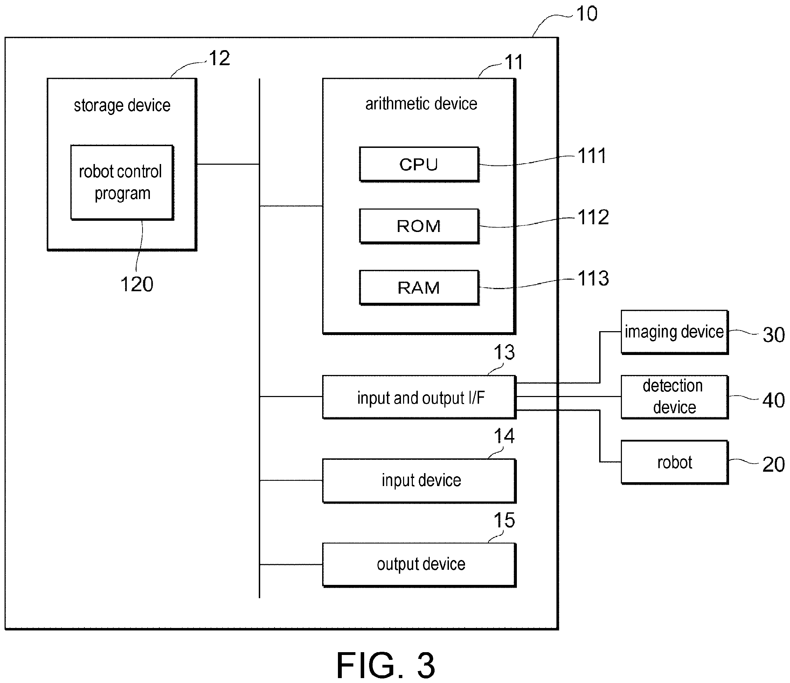

Next, an example of a hardware configuration of a robot control device 10 according to the present embodiment will be described with reference to Fig. 2 and Fig. 3.

The robot control device 10 controls an action of the robot 20. In the example shown in Fig. 2, the robot 20 is a 6-axis vertical articulated robot. The robot 20 includes a pedestal 21, a first link 22, a second link 23, a third link 24, a fourth link 25, a fifth link 26, a sixth link 27, and an end effector 28. The robot 20 includes a movable shaft (driving motor) that rotates and moves each link. Thus, the robot 20 has a configuration in which the pedestal 21 and the plurality of links 21 to 27 are connected to each other via a driving motor. Here, the end effector 28 is an example of the distal end of the hand of the robot 20.

The pedestal 21 is attached to a structure in which the robot 20 is installed. The pedestal 21 is connected to the first link 22 via a first movable shaft perpendicular to its upper surface. The first link 22 can rotate about the first movable shaft with respect to the pedestal 21. The first link 22 is formed of two plate members whose ends are connected to each other. The first link 22 is connected to the second link 23 via a second movable shaft perpendicular to facing surfaces of the two plate members. The second link 23 can rotate about the second movable shaft with respect to the first link 22.

The second link 23 is formed of two plate members whose ends are connected to each other. In the second link 23, the third link 24 is interposed between the two plate members. The second link 23 is connected to the third link 24 via a third movable shaft perpendicular to facing surfaces of the two plate members. The third link 24 can rotate about the third movable shaft with respect to the second link 23. The third link 24 is a member connected to the fourth link 25 via a fourth movable shaft parallel to facing surfaces of the two plate members of the second link 23. The fourth link 25 can rotate about the fourth movable shaft with respect to the third link 24.

The fourth link 25 is formed of two plate members whose ends are connected to each other. The two plate members of the fourth link 25 face each other. In the fourth link 25, the fifth link 26 is interposed between the two plate members. The fourth link 25 is connected to the fifth link 26 via a fifth movable shaft perpendicular to facing surfaces of the two plate members. The fifth link 26 can rotate about the fifth movable shaft with respect to the fourth link 25. The fifth link 26 is a member connected to the sixth link 27 via a sixth movable shaft perpendicular to facing surfaces of the two plate members of the fourth link 25.

The sixth link 27 is a member connected to the fifth link 26 via the sixth movable shaft. The fifth link 26 and the sixth link 27 are formed in a cylindrical shape. In addition, the fifth link 26 and the sixth link 27 have a common central shaft, and the sixth link 27 rotates about the seventh movable shaft with respect to the fifth link 26. The sixth link 27 has a connection structure for attaching the end effector 28 directly or indirectly via a connection member (attachment) at an end opposite to the end to which the fifth link 26 is connected and is a member connected to the end effector 28 via the connection structure.

The end effector 28 is a mechanism for gripping the object 70. The mechanism may have a structure that can grip the object 70. In addition, the end effector 28 may include a mechanism for attaching the object 70 in place of gripping the object 70. Here, the robot 20 is not limited to the 6-axis vertical articulated robot, and may have two or more movable shafts. The robot 20 may be, for example, a 5-axis vertical articulated robot or a 7-axis vertical articulated robot.

An imaging device (for example, camera) 30 that images a plurality of kinds of objects and the surrounding environment is connected to the robot control device 10. The image information 501 obtained by imaging by the imaging device 30 includes, for example, an image in which the relative positional relationship between the object 70 specified by the information 201 and the robot 20 can be determined.

Fig. 3 is an explanatory diagram showing an example of a hardware configuration of the robot control device 10. The robot control device 10 is a computer system including, as its hardware resource, an arithmetic device 11, a storage device 12, an input and output interface 13, an input device 14, an output device 15, the imaging device 30, and a detection device 40. The detection device 40 is, for example, an encoder that detects an angle of each joint of the robot 20. The arithmetic device 11 includes a central processing unit (CPU) 111, a read only memory (ROM) 112, and a random access memory (RAM) 113. The storage device 12 is a computer-readable recording medium such as a disk medium (for example, a magnetic recording medium or a magneto-optical recording medium) or a semiconductor memory (for example, a volatile memory or a non-volatile memory). Such a recording medium can also be called, for example, a non-transitory recording medium. The storage device 12 stores a robot control program 120. The robot control program 120 is read from the storage device 12 into the RAM 113 and is interpreted and executed by the CPU 111. In this case, the input and output interface 13 inputs the image information 501 from the imaging device 30, inputs the information 302 indicating the position and orientation of the robot 20 from the detection device 40, and outputs the action instruction 401 to the robot 20. The input device 14 is a device for the operator to input the information 201 and 202 to the robot control device 10. Examples of the input device 14 may include a keyboard, a mouse, and a touch panel. The output device 15 is a device for providing information for the operator to set or change machine learning of the learning module 103 (for example, specify the target relative positional relationship between the object 70 and the distal end of the hand of the robot 20, learn the position where the robot 20 grips the object 70, or change or finely adjust the position where the robot 20 grips the object 70) via, for example, a graphical user interface. Examples of the output device 15 include a display device (display).

### [Functional configuration]

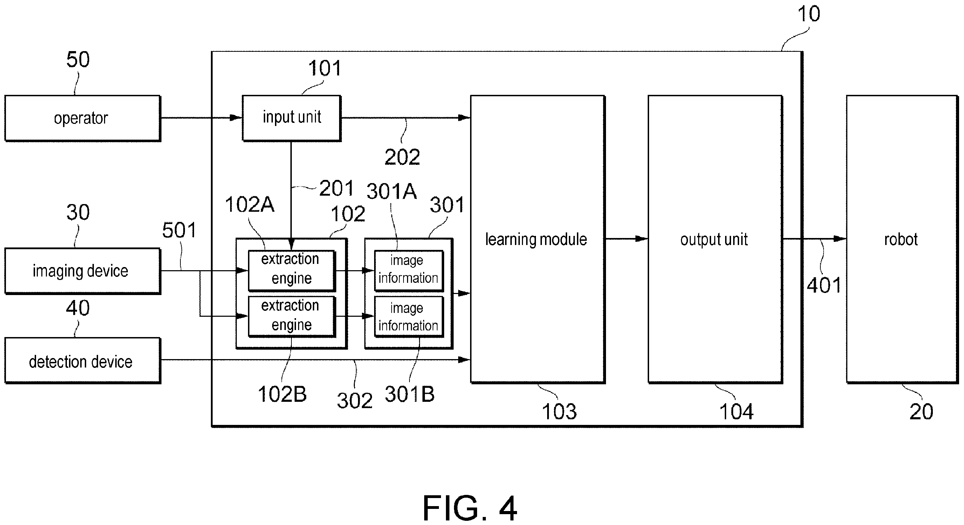

Fig. 4 is a block diagram showing an example of functions of the robot control device 10. Functions of an input unit 101, the extraction unit 102, the learning module 103, and an output unit 104 are realized by hardware resources of the robot control device 10 and the robot control program 120 in cooperation.

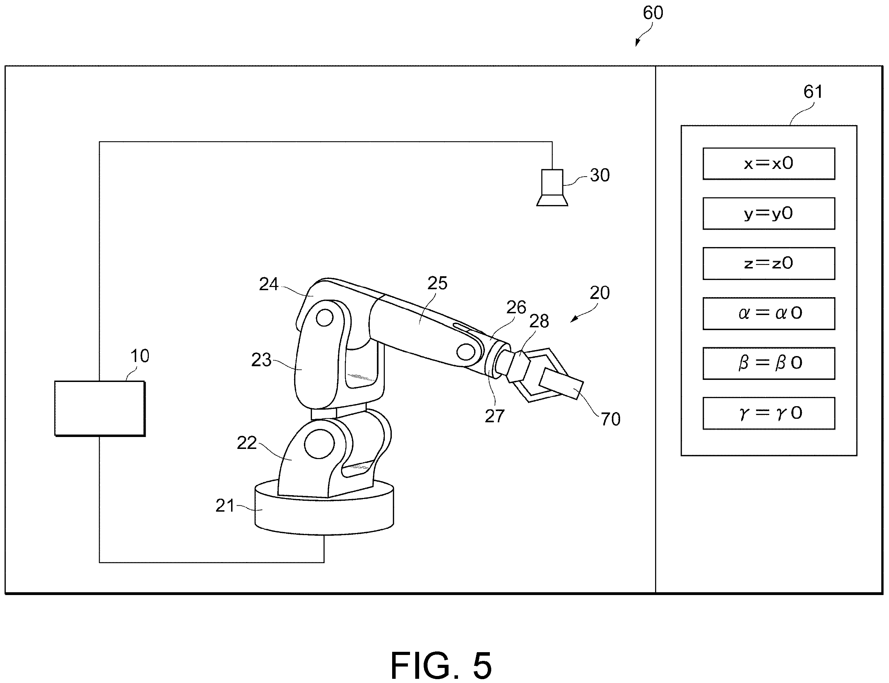

The input unit 101 receives inputs of the information 201 and 202 from an operator 50. Functions of the input unit 101 are realized by, for example, the arithmetic device 11, the input device 14, the output device 15, and the robot control program 120 in cooperation. The input unit 101 may provide, for example, a graphical user interface (GUI) for receiving inputs of the information 201 and 202 by the operator 50. Fig. 5 shows an example of such a graphical user interface. In this example, a window 61 for inputting the information 202 is displayed on a screen 60 of the output device 15. The operator 50 can set, for example, values of X=X0, Y=Y0, and Z=Z0 as relative position coordinate information (X, Y, Z) of the object 70 when viewed from the distal end of the hand of the robot 20 through the window 61. Similarly, the operator 50 can set, for example, values of α=α0, β=β0, and γ=γ0 as relative orientation information (α, β, γ) of the object 70 when viewed from the distal end of the hand of the robot 20 through the window 61. Here, α, β, and γ indicate a roll angle, a pitch angle, and a yaw angle of the object 70 when viewed from the distal end of the hand of the robot 20.

Here, Fig. 4 will be referred to again. The extraction unit 102 extracts a specific kind of object 70 specified in the information 201 from the image information 501 and generates the information 301 indicating the position and orientation of the specific kind of object 70. Functions of the extraction unit 102 are realized by, for example, the arithmetic device 11, the input and output interface 13, and the robot control program 120 in cooperation. The output unit 104 generates the action instruction 401 from the learning result of the learning module 103 and outputs it to the robot 20. Functions of the output unit 104 are realized by, for example, the arithmetic device 11, the input and output interface 13, and the robot control program 120 in cooperation.

Here, functions of the robot control device 10 (the input unit 101, the extraction unit 102, the learning module 103, and the output unit 104) need not necessarily be realized by hardware resources of the robot control device 10 and the robot control program 120 in cooperation, but may be realized using, for example, dedicated hardware resources of the robot control device 10 (for example, an application specific integrated circuit (ASIC) or a field programmable gate array (FPGA)).

### [Robot control method]

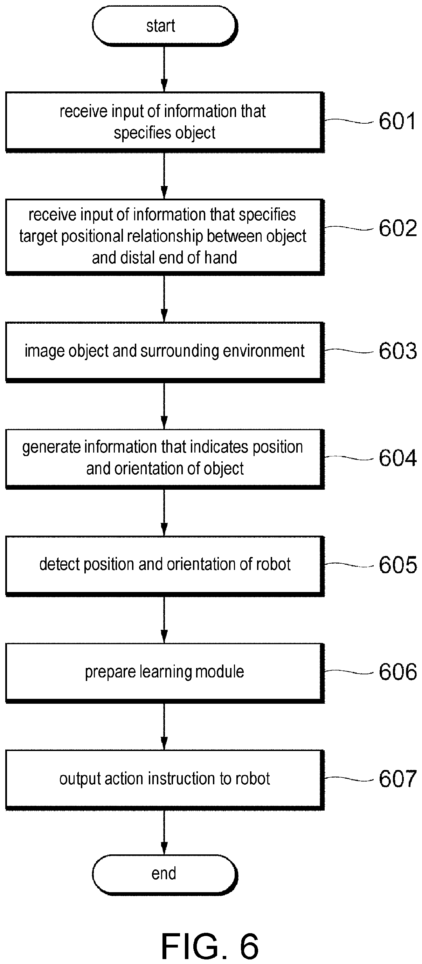

Fig. 6 is a flowchart showing an example of a flow of a process of a robot control method according to the present embodiment. In this process, the robot control device 10 controls an action of the robot 20 using the trained learning module 103 according to the robot control program 120.

In Step 601, the robot control device 10 receives an input of the information 201 that specifies a specific kind of object 70 to be manipulated by the robot 20 among a plurality of kinds of objects.

In Step 602, the robot control device 10 receives an input of the information 202 that specifies the target relative positional relationship between the specific kind of object 70 specified in the information 201 and the distal end of the hand of the robot 20.

In Step 603, the robot control device 10 images a plurality of kinds of objects and the surrounding environment.

In Step 604, the robot control device 10 extracts the specific kind of object 70 specified in the information 201 from the image information 501 obtained by imaging and generates the information 301 indicating the position and orientation of the specific kind of object 70.

In Step 605, the robot control device 10 detects the information 302 indicating the position and orientation of the robot 20.

In Step 606, the robot control device 10 prepares the learning module 103 including a trained model in which machine learning of the action of the robot 20 has been performed so that the relative positional relationship between the specific kind of object 70 specified in the information 201 and the distal end of the hand of the robot 20 matches the target relative positional relationship or a model having the same input and output relationship as the trained model.

In Step 607, the robot control device 10 generates the action instruction 401 that instructs the robot 20 to perform an action so that the relative positional relationship between the object 70 and the distal end of the hand of the robot 20 determined based on the information 301 indicating the position and orientation of the specific kind of object 70 and the information 302 indicating the position and orientation of the robot 20 matches the target relative positional relationship from the learning result of the learning module 103 and outputs the instruction to the robot 20.

Here, when it is not necessary to specify the kind of an object to be manipulated, for example, when the kind of an object to be manipulated by the robot 20 is one specific type, or when the number of objects to be manipulated is one, input of the information 201 to the robot control device 10 may be omitted.

Here, the robot 20 according to the present embodiment is not limited to industrial robots used for factory automation, and may be, for example, robots used for service industries (for example, operating robots, medical robots, cleaning robots, rescue robots, and security robots).

Some or all of the above embodiments may be described as the following appendices, but the present invention is not limited to the following.

### (Appendix 1)

A robot control device 10, including
an input unit 101 configured to receive an input of information 201 that specifies a specific kind of object 70 to be manipulated by a robot 20 among a plurality of kinds of objects and an input of information 202 that specifies a target relative positional relationship between the specific kind of object 70 specified and a distal end of a hand of the robot 20;
an imaging device 30 configured to image the plurality of kinds of objects and the surrounding environment;
an extraction unit 102 configured to extract the specific kind of object 70 specified from image information 501 obtained by imaging by the imaging device 30 and generate information 301 indicating the position and orientation of the specific kind of object 70;
a detection device 40 configured to detect the position and orientation of the robot 20;
a learning module 103 including a trained model in which machine learning of the action of the robot 20 has been performed so that the relative positional relationship between the specific kind of object 70 specified and the distal end of the hand of the robot 20 matches the target relative positional relationship or a model having the same input and output relationship as the trained model; and
an output unit 104 configured to generate an action instruction 401 that instructs the robot 20 to perform an action so that the relative positional relationship between the object 70 and the distal end of the hand of the robot 20 determined based on the information 301 indicating the position and orientation of the specific kind of object 70 generated by the extraction unit 102 and information 302 indicating the position and orientation of the robot 20 detected by the detection device 40 matches the target relative positional relationship from the learning result of the learning module 103 and output the instruction to the robot 20.

### (Appendix 2)

The robot control device 10 according to Appendix 1,
wherein the target relative positional relationship between the object 70 and the distal end of the hand of the robot 20 is constant regardless of the positions and orientations of the robot 20 and the object 70.

### (Appendix 3)

The robot control device 10 according to Appendix 1 or 2,
wherein the target relative positional relationship between the object 70 and the distal end of the hand of the robot 20 is able to be changed by application of an operator 50.

### (Appendix 4)

The robot control device 10 according to any one of Appendices 1 to 3,
wherein the input unit 101 includes a graphical user interface (GUI) for specifying the target relative positional relationship between the object 70 and the distal end of the hand of the robot 20.

### (Appendix 5)

The robot control device 10 according to any one of Appendices 1 to 4,
wherein the information 201 that specifies the specific kind of object 70 is input to the extraction unit 102.

### (Appendix 6)

A robot control method causing a computer system to execute:
Step 601 of receiving an input of information 201 that specifies a specific kind of object 70 to be manipulated by a robot 20 among a plurality of kinds of objects;
Step 602 of receiving an input of information 202 that specifies a target relative positional relationship between the specific kind of object 70 specified and a distal end of a hand of the robot 20;
Step 603 of imaging the plurality of kinds of objects and the surrounding environment;
Step 604 of extracting the specific kind of object 70 specified from image information 501 obtained by the imaging and generating information 301 indicating the position and orientation of the specific kind of object 70;
Step 605 of detecting the position and orientation of the robot 20;
Step 606 of preparing a learning module 103 including a trained model in which machine learning of the action of the robot 20 has been performed so that the relative positional relationship between the specific kind of object 70 specified and the distal end of the hand of the robot 20 matches the target relative positional relationship or a model having the same input and output relationship as the trained model; and
Step 607 of generating an action instruction 401 that instructs the robot 20 to perform an action so that the relative positional relationship between the object 70 and the distal end of the hand of the robot 20 determined based on the information 301 indicating the position and orientation of the specific kind of object 70 and information 302 indicating the position and orientation of the robot 20 matches the target relative positional relationship from the learning result of the learning module 103 and outputting the instruction to the robot 20.

### (Appendix 7)

A robot control program 120 causing a computer system to execute:
Step 601 of receiving an input of information 201 that specifies a specific kind of object 70 to be manipulated by a robot 20 among a plurality of kinds of objects;
Step 602 of receiving an input of information 202 that specifies a target relative positional relationship between the specific kind of object 70 specified and a distal end of a hand of the robot 20;
Step 603 of imaging the plurality of kinds of objects and the surrounding environment;
Step 604 of extracting the specific kind of object 70 specified from image information 501 obtained by the imaging and generating information 301 indicating the position and orientation of the specific kind of object 70;
Step 605 of detecting the position and orientation of the robot 20;
Step 606 of preparing a learning module 103 including a trained model in which machine learning of the action of the robot 20 has been performed so that the relative positional relationship between the specific kind of object 70 specified and the distal end of the hand of the robot 20 matches the target relative positional relationship or a model having the same input and output relationship as the trained model; and
Step 607 of generating an action instruction 401 that instructs the robot 20 to perform an action so that the relative positional relationship between the object 70 and the distal end of the hand of the robot 20 determined based on the information 301 indicating the position and orientation of the specific kind of object 70 and information 302 indicating the position and orientation of the robot 20 matches the target relative positional relationship from the learning result of the learning module 103 and outputting the instruction to the robot 20.

### [Reference Signs List]

10 Robot control device
11 Arithmetic device
12 Storage device
13 Input and output interface
14 Input device
15 Output device
20 Robot
30 Imaging device
40 Detection device
50 Operator
60 Screen
61 Window
70 Object
71 Part
72 Part
73 Part
101 Input unit
102 Extraction unit
103 Learning module
104 Output unit
120 Robot control program

## Claims

1. A robot control device, comprising:
an input unit configured to receive an input of information that specifies a specific kind of object to be manipulated by a robot among a plurality of kinds of objects and an input of information that specifies a target relative positional relationship between the specific kind of object specified and a distal end of a hand of the robot;
an imaging device configured to image the plurality of kinds of objects and the surrounding environment;
an extraction unit configured to extract the specific kind of object specified from image information obtained by imaging by the imaging device and generate information indicating the position and orientation of the specific kind of object;
a detection device configured to detect the position and orientation of the robot;
a learning module including a trained model in which the action of the robot has undergone machine learning so that the relative positional relationship between the specific kind of object specified and the distal end of the hand matches the target relative positional relationship or a model having the same input and output relationship as the trained model; and
an output unit configured to generate an action instruction that instructs the robot to perform an action so that the relative positional relationship between the object and the distal end of the hand determined based on the information indicating the position and orientation of the specific kind of object generated by the extraction unit and information indicating the position and orientation of the robot detected by the detection device matches the target relative positional relationship from the learning result of the learning module and output the instruction to the robot.

2. The robot control device according to claim 1,
wherein the target relative positional relationship between the object and the distal end of the hand is constant regardless of the positions and orientations of the robot and the object.

3. The robot control device according to claim 1 or 2,
wherein the target relative positional relationship between the object and the distal end of the hand is able to be changed by specification of an operator.

4. The robot control device according to any one of claims 1 to 3,
wherein the input unit includes a graphical user interface for specifying the target relative positional relationship between the object and the distal end of the hand.

5. The robot control device according to any one of claims 1 to 4,
wherein information that specifies the specific kind of object is input to the extraction unit.

6. A robot control method causing a computer system to execute:
a step of receiving an input of information that specifies a specific kind of object to be manipulated by a robot among a plurality of kinds of objects;
a step of receiving an input of information that specifies a target relative positional relationship between the specific kind of object specified and a distal end of a hand of the robot;
a step of imaging the plurality of kinds of objects and the surrounding environment;
a step of extracting the specific kind of object specified from image information obtained by the imaging and generating information indicating the position and orientation of the specific kind of object;
a step of detecting the position and orientation of the robot;
a step of preparing a learning module including a trained model in which the action of the robot has undergone machine learning so that the relative positional relationship between the specific kind of object specified and the distal end of the hand matches the target relative positional relationship or a model having the same input and output relationship as the trained model; and
a step of generating an action instruction that instructs the robot to perform an action so that the relative positional relationship between the object and the distal end of the hand determined based on the information indicating the position and orientation of the specific kind of object and information indicating the position and orientation of the robot matches the target relative positional relationship from the learning result of the learning module and outputting the instruction to the robot.

7. A robot control program causing a computer system to execute:
a step of receiving an input of information that specifies a specific kind of object to be manipulated by a robot among a plurality of kinds of objects;
a step of receiving an input of information that specifies a target relative positional relationship between the specific kind of object specified and a distal end of a hand of the robot;
a step of imaging the plurality of kinds of objects and the surrounding environment;
a step of extracting the specific kind of object specified from image information obtained by the imaging and generating information indicating the position and orientation of the specific kind of object;
a step of detecting the position and orientation of the robot;
a step of preparing a learning module including a trained model in which the action of the robot has undergone machine learning so that the relative positional relationship between the specific kind of object specified and the distal end of the hand matches the target relative positional relationship or a model having the same input and output relationship as the trained model; and
a step of generating an action instruction that instructs the robot to perform an action so that the relative positional relationship between the object and the distal end of the hand determined based on the information indicating the position and orientation of the specific kind of object and information indicating the position and orientation of the robot matches the target relative positional relationship from the learning result of the learning module and outputting the instruction to the robot.
